# EUROPÄISCHE PATENTSCHRIFT

(11) **EP 1 125 652 B1**
(45) Veröffentlichungstag und Bekanntmachung des Hinweises auf die Patenterteilung: **02.05.2003**
(21) Anmeldenummer: 01103790.0
(22) Anmeldetag: 16.02.2001
(51) Int. Cl.: B21C 37/08, B23K 11/087, B21D 5/08, B23K 26/00

(54) **Schweissvorrichtung und Verfahren zum Längsverschweissen von aus metallischem Bandmaterial geformten Profilen**
Welding apparatus and method for longitudinally seam welding of profiles formed from a metal strip
Dispositif de soudure et procédé pour la réalisation d'un joint soudé longitudinal dans des profilés obtenus par pliage d'une bande métallique

(30) Priorität: 18.02.2000 DE 10007496
(43) Veröffentlichungstag der Anmeldung: 22.08.2001
(73) Patentinhaber: Dreistern-Werk Maschinenbau GmbH & co. KG, 79650 Schopfheim (DE)
(72) Erfinder:
(74) Vertreter: Kaiser, Magnus, Dipl.-Phys.

(56) Entgegenhaltungen:
- DE-C- 19 834 400
- FR-A- 2 716 639
- US-A- 3 226 522
- US-A- 4 824 007

## Beschreibung

Die Erfindung betrifft eine Schweißvorrichtung und ein Verfahren zum Längsverschweißen von aus metallischem Bandmaterial geformten Profilen, nach dem Oberbegriff der Ansprüche 1 und 11.

Ein typischer Anwendungsbereich einer solchen Schweißvorrichtung ist bei Profilieranlagen gegeben, die eine Anzahl von Rollformwerkzeugen zum kontinuierlichen Umformen von Blechbändern in Profile unterschiedlichster Querschnittsform aufweisen. Bei bekannten Profilieranlagen zur Herstellung von Hohlprofilen oder auch zur Herstellung von dünnwandigen Rohren ist es bekannt, überlappende oder aneinanderstoßende Bereiche des Profils bzw. des Rohrs mit einer Schweißvorrichtung der eingangs genannten Art zu verbinden. Hierzu ist beispielsweise die DE 198 34 400 C1 der Anmelderin zu nennen.

In einem kontinuierlichen Herstellungsprozess von längsverschweißten Profilen (oder Rohren) stellt die Schweißvorrichtung hinsichtlich der Gesamtarbeitsgeschwindigkeit ein Nadelöhr dar: Um das Durchschweißen des für das Profil verwendeten Bandmaterials gewährleisten zu können, benötigt man entweder eine entsprechend hohe Schweißenergie, was die Herstellungs- und Betriebskosten der Anlage erheblich verteuern kann, oder aber die Einwirkzeit der Schweißenergie auf die herzustellende Schweißnaht muss entsprechend hoch sein, was die Verarbeitungsgeschwindigkeit der gesamten Anlage begrenzt. Die Verlangsamung der Anlage treibt jedoch ebenfalls die Betriebskosten in die Höhe.

Der vorliegenden Erfindung liegt daher die Aufgabe zugrunde, eine Schweißvorrichtung der eingangs genannten Art zu verbessern, so dass in einem kontinuierlichen Produktionsprozess ein schnelleres und wirtschaftlicheres Längsverschweißen eines Profils als bisher möglich ist.

Diese Aufgabe ist durch eine Schweißvorrichtung mit den Merkmalen des beigefügten Patentanspruchs 1 sowie durch ein Verfahren mit den Merkmalen des beigefügten Patentanspruchs 11 gelöst.

Vorteilhafte Ausgestaltungen und Weiterbildungen der Erfindung sind in den Patentansprüchen 2 bis 10 niedergelegt.

Das erfindungsgemäße Verfahren zum Längsverschweißen von aus metallischem Bandmaterial geformten Profilen und die entsprechende Schweißvorrichtung zeichnen sich also dadurch aus, dass ein mit einer Schweißnaht zu versehendes Profil mit kontinuierlichem Vorschub durch die Schweißvorrichtung geführt wird und dort wenigstens einen Schweißkopf passiert, der einen Schweißpunkt auf das Profil richtet, um die gewünschte Schweißnaht zu erzeugen, wobei der Schweißkopf derart periodisch bewegt wird, dass sich der Schweißpunkt in Vorschubrichtung des Profils periodisch vor und zurück bewegt.

Bei der Vorwärtsbewegung des Schweißkopfs wird also die Relativgeschwindigkeit zwischen dem Schweißpunkt und dem sich darunter wegbewegenden Profil verringert, so dass sich die Einwirkzeit der Schweißenergie erhöht. Gegenüber einem stationären Schweißkopf kann die zum Durchschweißen des Profilmaterials notwendige Schweißenergie daher verringert und/oder die Vorschubgeschwindigkeit des Profils erhöht werden. Sofern nur ein Schweißkopf zum Einsatz kommt, ergibt sich aufgrund dessen periodischer Bewegung naturgemäß keine durchgehend gleichbleibende Schweißnaht; sondern diese ist entsprechend der periodischen Bewegung des Schweißpunktes abwechselnd stärker und schwächer ausgebildet. Ein erfindungsgemäß arbeitender Schweißkopf erzeugt daher eine Art Steppschweißnaht, die nur abschnittsweise durchgeschweißt ist. In vielen Fällen bietet jedoch eine solche Steppschweißnaht für den Einsatzzweck des fertigen Profils vollkommen ausreichende Eigenschaften.

Wenn die Bildung einer Steppschweißnaht nicht erwünscht ist, kann dies beispielsweise durch Hintereinanderschalten von zwei oder mehr erfindungsgemäß beweglichen Schweißköpfen erzielt werden, deren Bereiche mit verminderter Relativgeschwindigkeit zwischen dem Schweißpunkt und dem Profil einander derart ergänzen und gegebenenfalls überlappen, dass im Ergebnis eine ununterbrochene, durchgehende Schweißnaht hergestellt wird, wobei die Vorschubgeschwindigkeit des Profils gleichwohl vorteilhaft hoch und/oder die für jeden Schweißkopf jeweils benötigte Schweißenergie vorteilhaft niedrig sein kann.

Vorzugsweise ist die Geschwindigkeit der Vorwärtsbewegung des Schweißpunktes so gewählt, dass sie kleiner als die Vorschubgeschwindigkeit des Profils ist. Der Betrag der Geschwindigkeitsdifferenz bestimmt hierbei die pro Volumeneinheit des Profilmaterials eingebrachte Schweißenergiemenge während der Vorwärtsbewegung des Schweißpunktes. Man hat mit dieser Geschwindigkeitsdifferenz also einen Parameter zur Hand, mit dem man die eingebrachte Schweißenergiemenge regeln kann.

Die erfindungsgemäße periodische Vorwärts- und Rückwärtsbewegung des Schweißpunktes entlang der Schweißnaht kann besonders vorteilhaft dadurch realisiert werden, dass der Schweißkopf schwenkbar aufgehängt und mit einem Antrieb zum Erzeugen einer Pendelbewegung versehen wird. Hierdurch kommt die Schweißvorrichtung ohne lineare Bewegungsachsen der Schweißköpfe und die damit zusammenhängenden hohen Linearbeschleunigungen aus. Wenn allerdings die in die Schweißnaht eingebrachte Schweißenergie sehr präzise in engen Toleranzen liegen muss, kann selbstverständlich auch eine lineare Mitfahrbewegung des Schweißkopfs mit dem durchlaufenden Profil am besten dazu geeignet sein, die erfindungsgemäßen Vorteile zu erzielen.

Der Schweißenergiefluss der erfindungsgemäßen Schweißvorrichtung wird vorzugsweise so geschaltet und/oder geregelt, dass bei der Vorwärtsbewegung des Schweißpunktes die volle Schweißenergie und bei der Rückwärtsbewegung des Schweißpunktes keine oder nur ein Bruchteil der vollen Schweißenergie in das Profil eingebracht wird. Hierdurch wird also eine "echte" Steppschweißnaht erzeugt, bei der die Verschweißung nur abschnittsweise erfolgt und die zwischen diesen Abschnitten liegenden Bereiche nicht oder nur unwesentlich mit Schweißenergie beaufschlagt werden.

Besonders einfach und vorteilhaft lassen sich die erfindungsgemäßen Maßnahmen bei einer Laser-Schweißanlage einsetzen. Ein Laserschweißkopf kann vom zu verschweißenden Werkstück beabstandet bleiben, so dass insbesondere eine Pendelbewegung des Schweißkopfs sehr leicht zu verwirklichen ist. Selbstverständlich kann statt dessen jedoch auch eine Hochfrequenzschweißanlage nach dem Erfindungsprinzip aufgebaut werden. In diesem Fall ist es zweckmäßig, wenn der Schweißkopf als Schleifkontakt ausgebildet wird.

Besondere Vorteile ergeben sich, wenn die Schweißvorrichtung mit zwei Schweißköpfen ausgerüstet wird, deren periodische Bewegungen um etwa eine halbe Periode gegeneinander verschoben sind. Auf diese Art und Weise kann beispielsweise, wenn beide Schweißköpfe auf ein und dieselbe Schweißnaht wirken und hintereinander angeordnet sind, die Dichte der verschweißten Abschnitte des Profils verdoppelt werden. Wenn mehr als zwei Schweißköpfe verwendet werden, deren Bewegungsphasen entsprechend über eine Bewegungsperiode verteilt werden, kann im Ergebnis sogar eine kontinuierlich durchgehende Schweißnaht erzeugt werden.

Ganz besondere Vorteile ergeben sich hierbei, wenn nur eine Schweißenergiequelle vorgesehen ist, die eine Verteilereinrichtung zum Zuführen der Schweißenergie an die Schweißköpfe aufweist. Besonders geeignet für solch eine Verteilung der Schweißenergie auf mehrere Schweißköpfe ist naturgemäß eine Laser-Schweißanlage, da die Verteilereinrichtung dann lediglich optische Komponenten, wie Spiegel und Lichtleiter, enthalten muss. Gerade bei Laserschweißanlagen benötigt die Schweißenergiequelle, nämlich der Laser, im allgemeinen sehr hohe E-nergiemengen, die sich in den Betriebskosten der gesamten Anlage bemerkbar machen; auch die Anschaffungskosten einer Laser-Schweißenergiequelle sind erheblich, so dass die Maßnahme, für alle Schweißköpfe nur eine einzige Schweißenergiequelle vorzusehen, erheblich zur Wirtschaftlichkeit der gesamten Anlage beiträgt.

Eine besonders bevorzugte Verwirklichung der Erfindung mit mindestens zwei Schweißköpfen, einer Schweißenergiequelle und einer Verteilereinrichtung besteht darin, dass eine Verteilereinrichtung eingesetzt wird, die die Schweißenergie zwischen den Schweißköpfen hin- und herschaltet. Dieses Hin- und Herschalten kann derart mit der periodischen Bewegung der Schweißköpfe gekoppelt sein, dass jeder Schweißkopf während seiner Vorwärtsbewegung die volle Schweißenergie des Lasers in das Material einbringt, wohingegen er bei der Rückwärtsbewegung inaktiv ist. Es ergeben sich so eine "doppelte" oder "mehrfache" Steppschweißnaht oder insbesondere zwei nebeneinander angeordnete Steppschweißnähte, bei denen in den verschweißten Abschnitten jeweils die volle Leistung der Schweißenergiequelle zur Verfügung stand, deren Wirkung durch die erfindungsgemäße Herabsetzung der Relativgeschwindigkeit zwischen Schweißpunkt und Profil noch deutlich erhöht war. Das Verhältnis der Parameter "Vorschubgeschwindigkeit des Profils", "erforderliche maximale Leistung der Schweißenergiequelle" und "in das Material eingebrachte Schweißenergiemenge" wird nach dieser Ausführungsform der Erfindung optimiert.

Selbstverständlich kann die Erfindung jedoch auch so realisiert werden, dass die Schweißenergie einer einzigen Schweißenergiequelle in einer Verteilereinrichtung auf insbesondere zwei Schweißköpfe aufgeteilt wird, so dass jeweils etwa die halbe Schweißenergie zur Verfügung steht.

Ein Ausführungsbeispiel der Erfindung wird im Folgenden anhand der Zeichnungen näher beschrieben und erläutert. Es zeigen in schematisierter Darstellung:
- Figur 1: eine Seitenansicht einer Profilieranlage mit Schweißvorrichtung;
- Figur 2: eine Draufsicht auf die Profilieranlage gemäß Figur 1;
- Figur 3: eine Ansicht der Profilieranlage gemäß Figur 1 in Richtung des Vorschubs;
- Figur 4 bis Figur 7: perspektivische Ansichten von vier längsverschweißten Profilen mit jeweils zwei Schweißnähten.

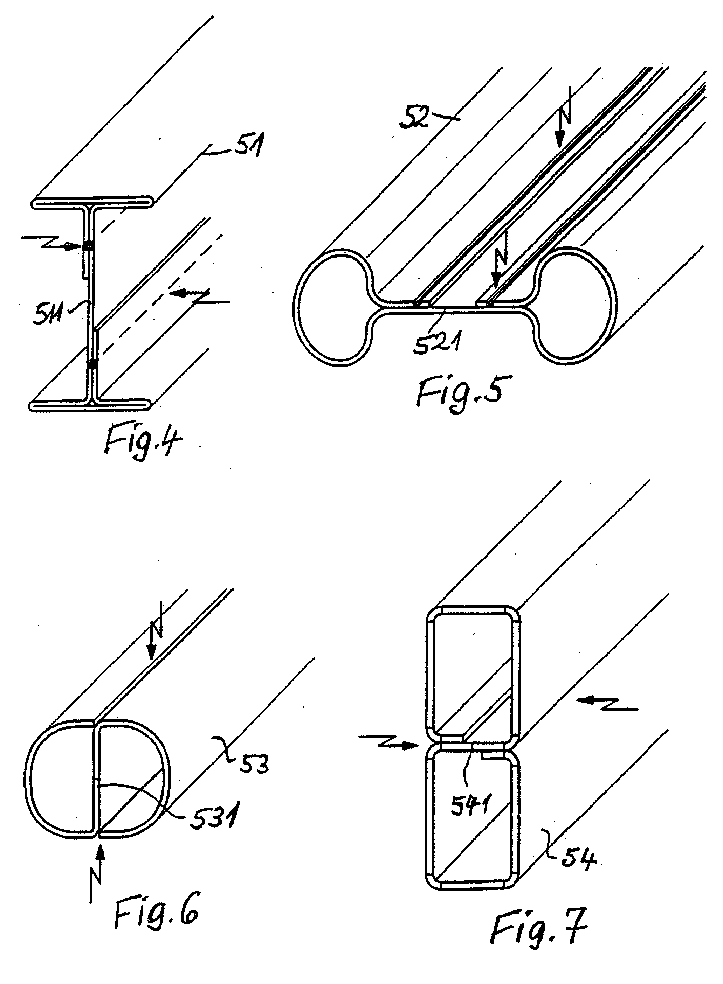

Eine im Ganzen mit 1 bezeichnete Profilieranlage weist eine Profiliermaschine 2 und eine in deren Verlauf angeordnete, im Ganzen mit 3 bezeichnete Schweißvorrichtung auf und dient zum Herstellen von aus metallischem Bandmaterial geformten, in den Figuren 4 bis 7 beispielhaft dargestellten Profilen 51, 52, 53 oder 54, wobei aber auch ganz andere Profilquerschnitte möglich sind.

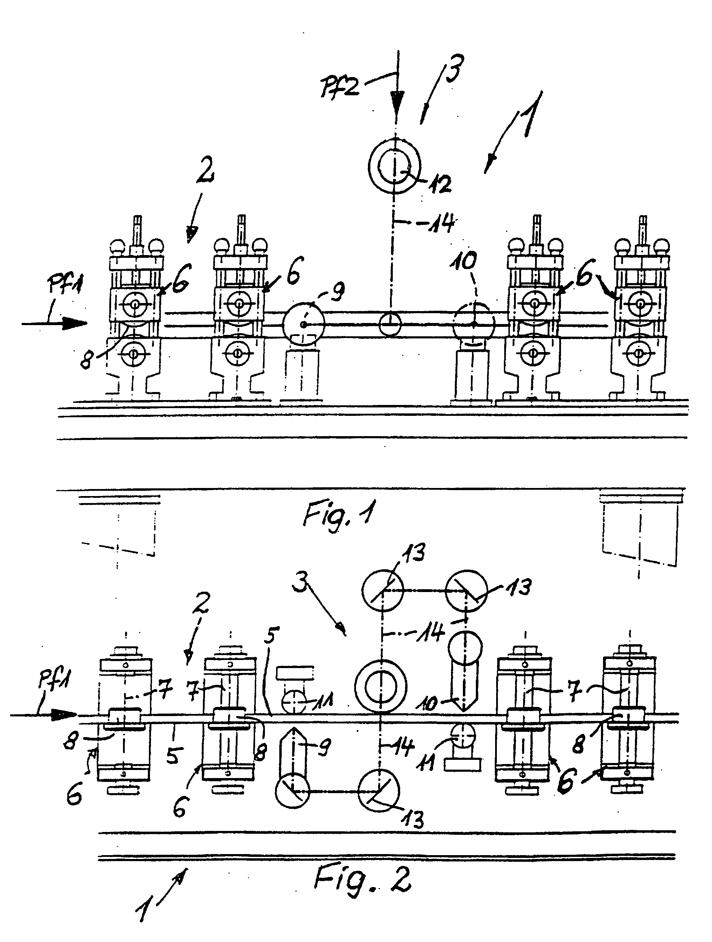

Die Profiliermaschine 2 weist in der durch den Pfeil Pf1 angedeuteten Vorschubrichtung des Bandmaterials hintereinander angeordnete Rollformwerkzeuge 6 auf, die jeweils aus wenigstens zwei auf parallelen Achsen 7 angeordneten, angetriebenen oder freilaufenden Formrollen 8 gebildet sind. Dabei erkennt man in den Figuren 1 und 2 sowohl vor als auch hinter der Schweißvorrichtung 3 solche Rollformwerkzeuge 6, wobei die in Vorschubrichtung vor der Schweißvorrichtung 3 befindlichen Rollformwerkzeuge 6 das eigentliche Profil 5 formen, während die hinter der Schweißvorrichtung 3 befindlichen Rollformwerkzeuge 6 zum Kalibrieren und/oder Richten dieses dann längs verschweißten Profiles 51 bis 54 dienen.

In den Figuren 1 bis 3 ist durch einen Pfeil Pf2 angedeutet, dass die Schweißvorrichtung 3 eine einzige Energiequelle, im vorliegenden Ausführungsbeispiel einen Laser aufweist, die mit zwei Schweißköpfen 9 und 10 zur Herstellung von zwei Schweißnähten am Profil 5 verbunden ist. Auf der dem jeweiligen Schweißkopf 9 oder 10 abgewandten Seite des Profils 5 ist jeweils eine Stützrolle 11 angeordnet, um das Profil 5 im Bereich der Verschweißung ausgerichtet zu halten.

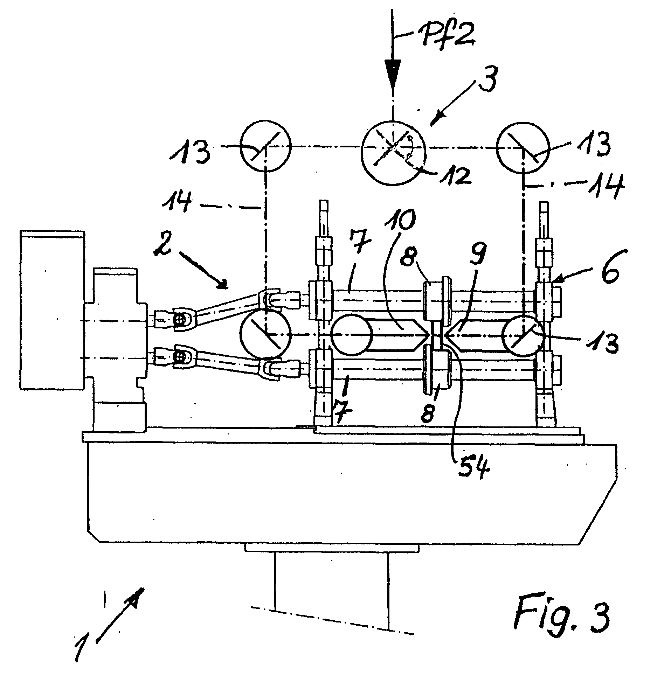

Wie in den Figuren 2 und 3 dargestellt, enthält die Schweißvorrichtung 3 eine aus einem klappbaren Wippspiegel 12 sowie mehreren Umlenkspiegeln 13 bestehende Verteilereinrichtung auf, um den vom Laser ausgehenden Laserstrahl 14 hin- und herzuschalten und den einzelnen Schweißköpfen 9 und 10 zuzuleiten. Der Verlauf des Laserstrahls 14 ist dabei mit strichpunktierten Linien angedeutet. Mit nur einer Schweißenergiequelle Pf2 können also zwei Schweißköpfe 9 und 10 gleichzeitig betrieben werden. Erforderlichenfalls können die Laserstrahlen 14 auch zumindest teilweise über Lichtleiter geführt sein.

Wie in Figur 2 angedeutet, sind die Schweißköpfe 9 und 10 jeweils schwenkbar befestigt, so dass sie hinsichtlich ihrer dem Profil 5 zugewandten Spitze eine Pendelbewegung ausführen können. Hierbei bewegt sich der Schweißkopf 9 bezüglich der Vorschubrichtung Pf1 genau dann vorwärts, wenn der Schweißkopf 10 zurückpendelt, und umgekehrt. Der klappbare Wippspiegel 12 leitet den Laserstrahl 14 jeweils demjenigen Schweißkopf 9 bzw. 10 zu, der gerade eine Vorwärts-Pendelbewegung durchführt. Auf diese Art und Weise werden zwei Steppschweißnähte hergestellt, wobei bei gegebener Laserenergie die Vorschubgeschwindigkeit des Profils 5 vorteilhaft hoch sein kann und die Einwirkzeit der Schweißenergie in den durchgeschweißten Abschnitten der Steppschweißnähte gleichwohl ausreichend ist.

Im dargestellten Ausführungsbeispiel sind die Schweißköpfe 9 und 10 beidseits des durch die Profiliermaschine 2 erzeugten Profils 5 bzw. 51 bis 54 gegenüberliegend angeordnet und wirken in einander entgegengesetzten Richtungen. Somit können einander gegenüberliegende Schweißnähte beispielsweise an einem Profil 54 gemäß Figur 7 oder auch an einem solchen gemäß Figur 6 angebracht werden.

Die Schweißköpfe 9 und 10 können aber auch in unterschiedlichen Höhen angeordnet sein, um ein Doppel-T-Profil 51 gemäß Figur 4 nach seiner entsprechenden Rollformung in Überlappungsbereichen an dem Mittelsteg 511 schweißen zu können.

Figur 5 zeigt ein Beispiel eines längsverschweißten Profils 52, bei welchem Überlappungsbereiche an einem Mittelsteg 521 auf derselben Seite liegen, so dass in diesem Falle zwei Schweißköpfe 9 und 10 auf derselben Seite des Profiles 52, dabei aber in der Höhe und auch zweckmäßigerweise in Vorschubrichtung Pf1 gegeneinander versetzt anzuordnen sind.

Die in den Figuren 4 bis 7 dargestellten Beispiele von Profilen 51, 52, 53 und 54 zeigen, wie mit der Vorrichtung 1 in zweckmäßiger Weise mit der erfindungsgemäßen Schweißvorrichtung 3 jeweils zwei (Stepp-)Schweißnähte an dem Profil 5 angebracht werden können, um dieses mit hoher Steifigkeit und Stabilität zu versehen.

Figur 4 zeigt dabei ein Doppel-T-Profil 51, welches aus einem Blechband gebildet wurde, wobei die Blechränder jeweils auf dem Quersteg 511 Überlappungen bilden und dort verschweißt sind.

Figur 5 zeigt ein der Figur 4 ähnliches Profil 52, bei welchem jedoch beidseits des Quersteges 521 Hohlprofile vorgesehen sind und die Überlappungen der Ränder des ursprünglichen Blechbandes auf derselben Seite des Quersteges 521 angeordnet sind.

Dabei ist in dieser Figur zusätzlich angedeutet, dass der Bereich der Schweißnaht zuvor eingeprägt werden kann, so dass im Bereich der Schweißnaht der Materialquerschnitt vermindert ist und dadurch Schweißenergie eingespart werden kann. Dies kann beispielsweise dadurch bewirkt werden, dass in der Profiliermaschine 2 in Vorschubrichtung vor der Schweißvorrichtung 3 eine oder mehrere Prägerollen zum Einprägen dieser Materialschwächung vorgesehen sind. Dies ist besonders dann zweckmäßig, wenn das Ausgangsmaterial eine relativ große Dicke hat, die ohne eine solche Prägung eine sehr hohe Schweißenergie erfordern würde.

Figur 6 zeigt ein Rohr 53 mit einem inneren Quersteg, welches durch eine etwa S-förmige Formgebung gebildet ist, wobei die beiden ursprünglichen Ränder jeweils an dem Bereich eines Mittelsteges 531 enden und dort verschweißt werden.

Vergleichbar mit der Anordnung nach Figur 6 ist das Profil 54 gemäß Figur 7, wobei es im Bereich des Mittelquersteges 541 noch Überlappungen gibt und die Querschnitte der einzelnen Kammern dieses Hohlprofiles eine Rechteckform aufweisen, die zu einer besonders hohen Steifigkeit und Torsionsfestigkeit führt.

An den Beispielen gemäß Figur 4 bis 7 wird deutlich, dass es in vielen Fällen von aus metallischem Bandmaterial gebildeten Profilen vorteilhaft sein kann, insbesondere die ursprünglichen Ränder des Ausgangsmateriales in einem Überlappungsoder Berührbereich zu verschweißen, so dass gemäß dieser ursprünglichen zwei Ränder auch zwei Schweißnähte günstig sein können.

Abschließend sei bemerkt, dass der Terminus "Profil", wie er in den beigefügten Patentansprüchen verwendet ist, auch ein durch Umformen aus Bandmaterial hergestelltes Rohr umfasst.

### Bezugszeichenliste

- 1: Profilieranlage
- 2: Profiliermaschine
- 3: Schweißvorrichtung
- 5: Profil
- 6: Rollformwerkzeug
- 7: Achse
- 8: Formrolle
- 9: Schweißkopf
- 10: Schweißkopf
- 11: Stützrolle
- 12: Wippspiegel
- 13: Umlenkspiegel
- 14: Laserstrahl
- 51: Profil
- 52: Profil
- 53: Profil
- 54: Profil
- 511: Mittelsteg (von 51)
- 521: Mittelsteg (von 52)
- 531: Mittelsteg (von 53)
- 541: Mittelquersteg (von 54)
- Pf1: Vorschubrichtung (von 5)
- Pf2: Schweißenergiequelle

## Patentansprüche

1. Schweißvorrichtung zum Längsverschweißen von aus metallischem Bandmaterial geformten Profilen (51, 52, 53, 54) mit wenigstens einem Schweißkopf (9) und einer Einrichtung (2, 8, 11) zum kontinuierlichen Transport eines Profils (5) durch die Schweißvorrichtung (3), wobei der Schweißkopf (9) so ausgestaltet ist, dass er einen Schweißpunkt auf dem kontinuierlich durch die Schweißvorrichtung (3) transportierten Profil (5) erzeugt, um eine Schweißnaht herzustellen,
**dadurch gekennzeichnet,**
**dass** der Schweißkopf (9) periodisch bewegbar ausgebildet ist, um den Schweißpunkt entlang der Schweißnaht in Vorschubrichtung (PF1) des Profils (5) periodisch vor- und zurückzubewegen.

2. Schweißvorrichtung nach Anspruch 1,
**dadurch gekennzeichnet,**
**dass** der Schweißkopf (9) derart periodisch bewegbar ausgebildet ist, dass die Geschwindigkeit der Vorwärtsbewegung des Schweißpunktes kleiner ist als die Vorschubgeschwindigkeit des Profils (5).

3. Schweißvorrichtung nach einem der Ansprüche 1 oder 2,
**dadurch gekennzeichnet,**
**dass** der Schweißkopf (9) schwenkbar ausgebildet und mit einem Antrieb zum Erzeugen einer Pendelbewegung versehen ist.

4. Schweißvorrichtung nach einem der Ansprüche 1 bis 3,
**dadurch gekennzeichnet,**
**dass** der Schweißenergiefluss so geschaltet und/oder geregelt ist, dass bei der Vorwärtsbewegung des Schweißpunktes die volle Schweißenergie und bei der Rückwärtsbewegung des Schweißpunktes keine oder nur ein Bruchteil der vollen Schweißenergie in das Profil (5) eingebracht wird.

5. Schweißvorrichtung nach einem der Ansprüche 1 bis 4,
**dadurch gekennzeichnet,**
**dass** sie als Laser- oder Hochfrequenzschweißanlage ausgebildet ist.

6. Schweißvorrichtung nach einem der Ansprüche 1 bis 5,
**dadurch gekennzeichnet,**
**dass** sie mindestens zwei Schweißköpfe (9, 10) umfasst.

7. Schweißvorrichtung nach Anspruch 6,
**dadurch gekennzeichnet,**
**dass** die periodischen Bewegungen der Schweißköpfe (9, 10) phasenverschoben, insbesondere über eine volle Periode gleichverteilt phasenverschoben sind.

8. Schweißvorrichtung nach einem der Ansprüche 6 oder 7,
**dadurch gekennzeichnet,**
**dass** nur eine Schweißenergiequelle (Pf2) vorgesehen ist, die mit einer Verteilereinrichtung (12, 13) zum Zuführen der Schweißenergie an die Schweißköpfe (9, 10) versehen ist.

9. Schweißvorrichtung nach Anspruch 8,
**dadurch gekennzeichnet,**
**dass** die Verteilereinrichtung (12, 13) so ausgebildet ist, dass sie die Schweißenergie zwischen den Schweißköpfen (9, 10) hin- und herschaltet.

10. Schweißvorrichtung nach Anspruch 8,
**dadurch gekennzeichnet,**
**dass** die Verteilereinrichtung (12, 13) so ausgebildet ist, dass sie die Schweißenergie zwischen den Schweißköpfen (9, 10) aufteilt.

11. Verfahren zum Längsverschweißen von aus metallischem Bandmaterial geformten Profilen, wobei ein mit einer Schweißnaht zu versehendes Profil mit kontinuierlichem Vorschub durch eine Schweißvorrichtung geführt wird, und wobei in der Schweißvorrichtung von einem Schweißkopf ein Schweißpunkt auf das Profil gerichtet wird, um eine Schweißnaht zu erzeugen,
**dadurch gekennzeichnet,**
**dass** der Schweißkopf so periodisch bewegt wird, dass sich der Schweißpunkt in Vorschubrichtung des Profils entlang der Schweißnaht periodisch vor- und zurückbewegt.

## Claims

1. Welding device for the longitudinal welding of shaped articles (51, 52, 53, 54) formed from metal strip material, having at least one welding head (9) and a device (2, 8, 11) for the continuous transport of a shaped article (5) through the welding device (3), the welding head (9) being so configured that it produces a weld point on the shaped article (5) being transported continuously through the welding device (3) in order to make a welded seam,
**characterised in that**
the welding head (9) is arranged to be periodically movable in order to move the weld point periodically back and forth along the welded seam in the direction of advance (Pf1) of the shaped article (5).

2. Welding device according to claim 1,
**characterised in that**
the welding head (9) is arranged to be periodically movable in such a manner that the speed of forward movement of the weld point is lower than the rate of advance of the shaped article (5).

3. Welding device according to either one of claims 1 and 2,
**characterised in that**
the welding head (9) is arranged to be pivotable and is provided with a drive means for producing a pendulum movement.

4. Welding device according to any one of claims 1 to 3,
**characterised in that**
the welding energy flow is switched and/or regulated in such a manner that during the forward movement of the weld point the full welding energy and during the rearward movement of the weld point no welding energy or only a fraction of the full welding energy is introduced into the shaped article (5).

5. Welding device according to any one of claims 1 to 4,
**characterised in that**
it is in the form of a laser welding apparatus or a high-frequency welding apparatus.

6. Welding device according to any one of claims 1 to 5,
**characterised in that**
it comprises at least two welding heads (9, 10).

7. Welding device according to claim 6,
**characterised in that**
the periodic movements of the welding heads (9, 10) are phase-shifted, especially phase-shifted so as to be distributed equally over a full cycle.

8. Welding device according to either one of claims 6 and 7,
**characterised in that**
only one welding energy source (Pf2) is provided, which is provided with a distributor device (12, 13) for supplying the welding energy to the welding heads (9, 10).

9. Welding device according to claim 8,
**characterised in that**
the distributor device (12, 13) is so constructed that the welding energy switches back and forth between the welding heads (9, 10).

10. Welding device according to claim 8,
**characterised in that**
the distributor device (12, 13) is so constructed that it divides the welding energy between the welding heads (9, 10).

11. Method of longitudinally welding shaped articles formed from metal strip material, wherein a shaped article to be provided with a welded seam is advanced continuously through a welding device, and wherein in the welding device a weld point is directed onto the shaped article by a welding head in order to produce a welded seam,
**characterised in that**
the welding head is moved periodically in such a manner that the weld point moves periodically back and forth along the welded seam in the direction of advance of the shaped article.

## Revendications

1. Dispositif de soudure pour souder longitudinalement des profilés (51, 52, 53, 54) constitués par un matériau métallique en bande, comprenant au moins une tête de soudure (9) et un dispositif (2, 8, 11) pour transporter de façon ininterrompue un profilé (5) à travers le dispositif de soudure (3), sachant que la tête de soudure (9) est réalisée de telle sorte qu'elle effectue un point de soudure sur le profilé (5) traversant de façon ininterrompue le dispositif de soudure (3) afin de créer un cordon de soudure, **caractérisé en ce que** la tête de soudure (9) est conçue de façon à pouvoir être déplacée périodiquement, afin de faire avancer et reculer périodiquement le point de soudure le long du cordon de soudure par rapport au sens d'avancement (PF1) du profilé (5).

2. Dispositif de soudure selon la revendication 1, **caractérisé en ce que** la tête de soudure (9) est conçue de façon à pouvoir être déplacée périodiquement de telle sorte que la vitesse du mouvement d'avancement du point de soudure soit inférieure à la vitesse d'avancement du profilé (5).

3. Dispositif de soudure selon la revendication 1 ou 2, **caractérisé en ce que** la tête de soudure (9) est réalisée de façon pivotante et est équipée d'un entraînement qui lui confère un mouvement pendulaire.

4. Dispositif de soudure selon l'une des revendications 1 à 3, **caractérisé en ce que** le flux d'énergie de soudure est tel et/ou réglé de telle sorte que lors du mouvement d'avancement du point de soudure, la totalité de l'énergie de soudure est appliquée au profilé (5) et lors du mouvement de recul du point de soudure, aucune énergie de soudure ou seulement une fraction de l'énergie de soudure totale lui est appliquée.

5. Dispositif de soudure selon l'une des revendications 1 à 4, **caractérisé en ce qu'**il est réalisé en tant que poste de soudure au laser ou à haute fréquence.

6. Dispositif de soudure selon l'une des revendications 1 à 5, **caractérisé en ce qu'**il comprend au moins deux têtes de soudure (9, 10).

7. Dispositif de soudure selon la revendication 6, **caractérisé en ce que** les mouvements périodiques des têtes de soudure (9, 10) présentent un décalage de phase, notamment un décalage de phase uniforme s'étendant sur l'ensemble d'une période.

8. Dispositif de soudure selon la revendication 6 ou 7, **caractérisé en ce qu'**une seule source d'énergie de soudure (Pf2) est prévue, qui est munie d'un distributeur (12, 13) pour alimenter les deux têtes de soudure (9, 10) en énergie de soudure.

9. Dispositif de soudure selon la revendication 8, **caractérisé en ce que** le distributeur (12, 13) est conçu de telle sorte qu'il alimente alternativement les deux têtes de soudure (9, 10) en énergie de soudure.

10. Dispositif de soudure selon la revendication 8, **caractérisé en ce que** le distributeur (12, 13) est réalisé de telle manière qu'il répartit l'énergie de soudure entre les têtes de soudure (9, 10).

11. Procédé pour souder longitudinalement des profilés constitués par un matériau métallique en bande, sachant qu'un profilé destiné à être doté d'un cordon de soudure passe de façon ininterrompue à travers un dispositif de soudure et qu'une tête de soudure appose à l'intérieur du dispositif de soudure un point de soudure sur le profilé afin de réaliser un cordon de soudure, **caractérisé en ce que** la tête de soudure se déplace avec une période telle que le point de soudure avance et recule périodiquement le long du cordon de soudure par rapport au sens d'avancement du profilé.
